# NEW EUROPEAN PATENT SPECIFICATION

(11) **EP 0 579 925 B2**
(45) Date of publication and mention of the opposition decision: **19.05.2004**
(45) Mention of the grant of the patent: 16.07.1997
(21) Application number: 93108241.6
(22) Date of filing: 21.05.1993
(51) Int. Cl.: B29C 45/16

(54) **A device for the co-injection in different points of a mold**
Vorrichtung zum Kospritzgiessen an verschiedenen Stellen einer Form
Dispositif pour la coinjection à des endroits différents d'un moule

(30) Priority: 23.06.1992 IT MI921537
(43) Date of publication of application: 26.01.1994
(73) Proprietor: Johnson Control S.P.A., 22050 Lomagna (CO) (IT)
(72) Inventor: Siano, Dante, I-20093 Cologno Monzese (Milan) (IT)
(74) Representative: Marietti, Giuseppe

(56) References cited:
- EP-A- 0 480 223
- DE-A- 1 929 363
- DE-A- 2 129 348
- DE-AA- 2 129 348
- GB-A- 1 369 744
- US-A- 4 964 795
- US-A- 5 094 603
- PATENT ABSTRACTS OF JAPAN vol. 11, no. 125 (M-582)(2572) 18 April 1987 & JP-A-61 268 421 (SUMITOMO HEAVY IND.LTD.)
- PATENT ABSTRACTS OF JAPAN vol. 17, no. 139 (M-1385)22 March 1993 & JP-A-04 316 818 (JAPAN STEEL WORKS LTD.)
- Handbuch Spritzgiessen "Auf Kurs in die 90er Jahren", Battenfeld GmbH
- Prospekt "Spritzgiessstechnik 1987/88 des Battenfeld GmbH

## Description

The present invention concerns a device to carry out a coinjection of materials in the fluid state into a mold.

The word "co-injection" indicates a molding process by injection at high pressure of two or more different materials at the fluid state, for example two different thermoplastic materials, for mass production of manufactured products having specific aesthetical and functional characteristics. The products thus obtained are used in a wide range of applications, for instance to obtain internal panels for cars, chairs or panels for furniture, household goods, housefurnishings and still others.

By means of the same process of coinjection, by injecting a material at the gaseous state and one or more thermoplastic materials, it is futhermore possible to obtain products of particularly accurate finishing, specially when reinforcing ribs, holes within curved shapes and so on must be provided for.

A typical case is that of the mass production of internal panels for cars that are constituted by two thermoplastic materials, one of which will form the external covering, while the other will constitute the substratum or core of the panel.

The process of coinjection of more materials is based on the behaviour of the flow of a melted mass inside a mold as well as on the behaviour of similar materials, e.g. thermoplastic ones, that however cannot be amalgamated with each other at the fluid state. In fact the materials to be injected are heated and kept at preset temperatures that maintain them at the fluid state, and are then injected under pressure into a preset point of the mold.

For instance, in the mentioned case of production of panels for motorvehicles, the lining material is first injected into the mold through a suitably selected injection point; the fluid mass under pressure expands and comes into contact with the mold walls with consequent cooling and formation of a film in correspondence with the contact areas. The internal portion of the mass substantially maintains the same initial temperature and therefore its fluid state.

The parameters of the process - namely injection pressure, temperature and mass flow rate - are established in order to allow a uniform expansion of the fluid mass in the mold.

After a settable delay - established on the basis of the run of the fluid mass, of the thickness of the lining and of the desired final composition of the product - the injection of a supporting material is started in correspondence to the same point of the mold. This causes the mass of the supporting material to penetrate the internal portion, still at the fluid state, of the mass of the lining material, so to obtain a homogeneous stratification of the final product.

The injection time period of each material depends on the type of the materials used, on the pressure and injection temperature conditions of each one and on the final result that is expected to be obtained. In particular, the injection of a subsequent material may start before or after that a previous material has been completely injected into the mold.

In the known technique the coinjection is performed in a pre-established point of a mold through a coinjection unit that comprises as many injectors, generally coaxial and internal to each other, as is the number of the materials to be injected into the mold. The feeding of materials to the injection unit is carried out by means of a press that feeds them at the suitable conditions of pressure and temperature, while the regulation of the flow rate is performed through the injection unit.

A device which performs the conjection of a plurality of resin materials is described in European Application N° EP 0 467 274 in the name of Nissei ASB Machine Co. This device is a multi-ply molding hot-runner mold including a plurality of nozzle bodies for injecting a pluratify of different resin materials to form a multy-ply product. The hot-runner mold comprise a plurality of hot-runner blocks each having a runner for conducting each resin material into the corresponding nozzle body. The hot-runner blocks are stacked one above another through a thermal insulation layer therebetween. Each of the hot-runner block includes temperature control means for mantaining the hot-runner block at his own inherent molding temperature.

Another example of a device for the coinjection is disclosed in European Application N° EP 0 480 223 in the name of Gellert. This document discloses a multicavity injection molding system comprising a hot runner manifold composed of a first and a second hot runner plate, disposed substantially in parallel one behind the other, and comprising also means to feed at least two different plastic materials along horizontal hot runners to injection nozzles disposed in front of the second hot runner plate.

Moreover, United States Patent N° US 5 094 603 in the name of Gellert describes a molding apparatus to coinject pressurized melt from two or more melt sources to a plurality of cavities, comprising a plurality of heated nozzles, each nozzle being in association with a corresponding one of said plurality of cavities. An outer melt passage is separated by curved conduits on opposite faces of the melt distribution plate into four channels which are radially spaced around the central bore of the nozzle. The four channels lead to a melt funnel duct which extends in the adjacent cavity forming insert around the nose portion of the nozzle.

Japanese Patent N° JP 61-268421 in the name of Sumitomo describes a device for the manufacturing of a multi-layer molded body with sandwich structure. The device comprises a first and a second hot runners, an outside nozzle for the injection of a first resin material and an inside nozzle for the injection of a second resin material. The opening and closing of the outside nozzle is done through the increase or decrease of the distance between the first and the second hot runner and the opening and closing of the inside nozzle is done by the forward and backward movements of a needle.

In all the above cited documents the devices therein described comprise one nozzle for every single cavity.

US-A-4 964 795 describes a manifold assembly for conveying plastic injection molding material from a central injection point to multiple points within one large mold cavity. GB-A-1 369 744 discloses an injection molding unit for controlling the flow of plastics materials from two sources into a mould cavity, comprising two sprue channels.

US 4,104,353 relates to a method and an apparatus for the production of articles of large size having at least locally a core portion and a skin portion, wherein the plastic core and skin portions are sequentially injected at at least two zones of a mould cavity and "leakage means" (i.e. cavities 43) are provided in the junction planes of the masses of the skin material to receive said skin material and permit the joining of the core material in those areas. This results in appendites that have to be removed from the final provduct.

The known coinjection devices, though they are effective for the production of simple articles, are scarcely suitable for the mass production of products that present complex geometrical pieces, variable sections or wide surface extensions. As a matter of fact, for the production of such articles, particular care must be devoted to the mold formation, for instance providing therein supplementary cavities to allow the homogeneous diffusion of the first injected material, simultaneously keeping a correct proportion between the latter and the materials subsequently injected. Obviously said features involve the need of removing exceeding portions with consequent increase of wastes and longer production times, therefore with a long and economically unfavourable operating process. Very often the first injected material, namely the one that will constitute the lining of the product, is also the most expensive material, and it is therefore furtherly costly to be forced to inject it in a greater quantity than the needed one. Furthermore, a homogeneous distribution of materials in all areas of the mold cannot be guaranteed, since the complex structure of the mold internal volumes often causes the premature cooling of the first injected material; therefore the result is a product with irregular stratification, namely with certain areas in which the correct proportion between materials is not respected or, even worse, in which only one of the injected materials is present.

Alternatively, structurally complex products have been obtained by assembling simpler elements separately produced by means of the known coinjection devices. However, though an improved homogeneity of material distribution in their correct proportions is obtained, production costs considerably increase both due to the higher number of molds necessary for each single type of product and to longer times needed to manufacture and assemble the different elements.

An object of the present invention is therefore to overcome the aforesaid disadvantages by providing a device to perform a coinjection molding that allows the mass production of any type of products, from the simplest ones to those structurally more complex or superficially very wide, also ensuring the distribution homogeneity of the injected materials in their correct proportions and the achievement of desired aesthetical and functional features.

Said object is achieved by the present invention that concerns a device to perform the coinjection into a mold of at least two materials according to claim 1.

Thanks to the device according to the invention it is therefore possible to perform coinjection in a plurality of points in a mold, which can be also complex and wide, thus allowing the mass production of products with the homogeneous distribution of materials in appropriate proportions, and therefore ensuring an optimal result from the aesthetical and functional viewpoint of the product with reduced times and costs.

This and others advantages will become more evi- . dent from the following description, given by way of illustration and with no limiting purposes, with reference to the accompanying drawings, wherein:
- figure 1 is a sectional schematic view of an embodiment of the device according to the invention;
- figure 2 is a sectional schematic view of a coinjection nozzle not according to the invention;
- figure 3 is a sectional schematic view of a device according to an alternative embodiment of the invention; and
- figure 4 is a sectional schematic view of a coinjection nozzle used in the device shown in figure 3.

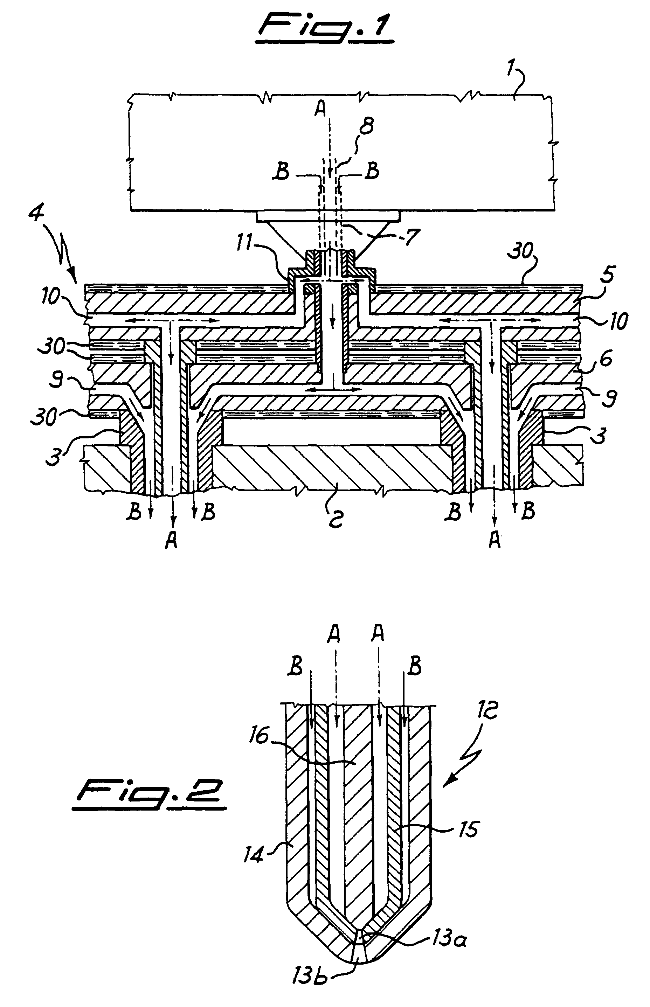

Figure 1 represents an embodiment of a device for the coinjection of two materials A, B, upstream connected with a press 1 or other similar equipment capable of downstream delivering said materials at convenient pressures and, temperatures, to a mold 2 through coinjection units 3.

The device 4 comprises two distinct plates 5 and 6, independently heated by heating means 30 and controlled in temperature, provided between feeding ducts 7 and 8 for the materials at the fluid state coming from a press 1, and ducts 9 and 10 for the distribution of the same materials to a plurality of coinjection units 3 housed in the mold 2.

In the embodiment as shown in figure 1, the feeding ducts 7, 8, are coaxial and arranged one inside the other. In correspondence to a fitting 11, the ducts are separated in such a way that each one follows its own path in the relevant plate, in order to allow an independent temperature control of each material.

The heating and the temperature control of the plates is carried out by known means, for instance using resistors 30 and thermocouples (not shown) housed in the plates themselves.

To illustrate more clearly the paths of materials inside the device, the path of material A is indicated by dashed-dotted arrows, while path of material B is indicated by continuous line arrows.

In correspondence to the injection points provided on the mold 2, the ducts 9, 10 are again brought to the coaxial arrangement corresponding to that of feeding ducts 7, 8, to allow their connection to the coinjection units 3. These latter units comprise two coaxial injectors separately operatable to allow the regulation of the mass flow rate of the injected materials.

Figure 2 schematically shows in cross-section the lower portion of coinjection unit namely the one provided in correspondence to a hollow portion of the mold 2, in the position of non delivery of both materials A and B from the relevant nozzles 13a and 13b.

To perform the delivery of material A, the shutter 16 is lifted with respect to the body 15 of the internal injector, thus freeing the injection port of the nozzle 13a. The delivery of material B, on the contrary, takes place by lifting the body 15 of the internal injector, also acting as a shutter of the injection port of the nozzle 13b, with respect to the body 14 of the external injector. It is moreover possible to obtain a combination of movements allowing a simultaneous delivery of both materials.

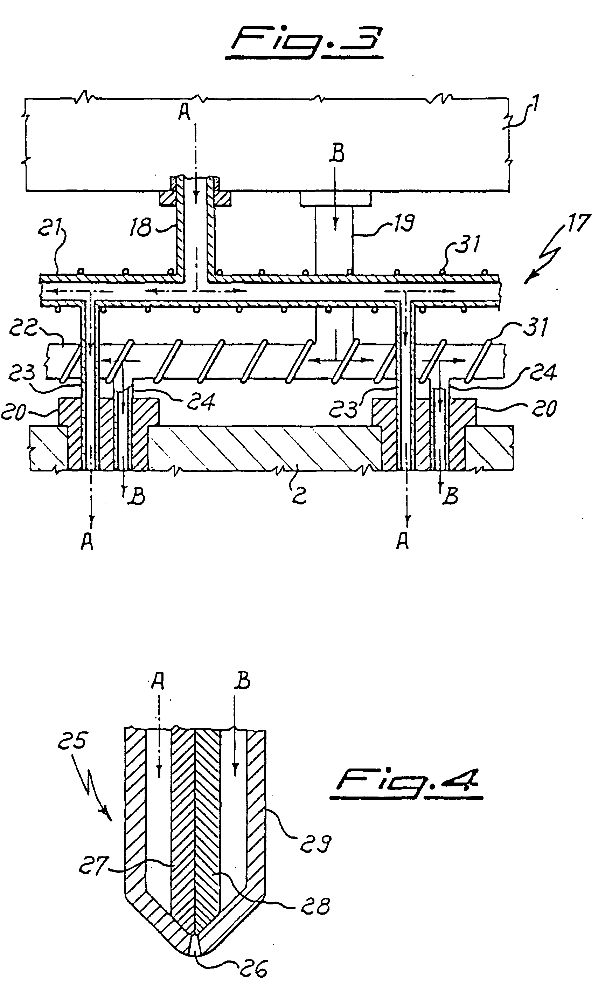

Figure 3 shows an embodiment of a device 17 for the coinjection in more points of a mold. According to the present invention the device 17 is upstream connected to a press 1 through two distinct tubular ducts 18 and 19 for feeding materials A and B respectively, while downstream it is connected to a mold in correspondence to a plurality of coinjection units 20.

The device 17 comprises two distinct tubular ducts 21 and 22, independently heated by heating means 31 and controlled in temperature, provided between feeding ducts 18 and 19 the materials at the fluid state coming from press 1, and the ducts 23 and 24 for the distribution of the same materials to each of the coinjection units 20 housed in the mold 2.

In this case, too, the tubular ducts 21 and 22 are separated, in order to allow a separate heating and temperature control of the materials that are flowing therein; also the heating and temperature control are performed by known means, for example by using electrical resistors 31 and thermocouples (not shown) placed directly in contact with the ducts 21, 22.

From each duct 21 and 22 many ducts are derived, 23 and 24 respectively, that reach the single injection units 20 provided on the mold 2.

The coinjection units 20 provided in the embodiment of figure 3 comprise two injectors placed side by side and separately operable, to allow an independent regulation of the mass flow rate of injected materials; Figure 4 schematically shows in cross section the lower portion 25 of a coinjection unit 20 namely that portion provided in correspondence to a hollow portion of the mold 2, in the position of non delivery of both materials A and B from the nozzle 26.

To perform the delivery of material A a shutter 27 is lifted from the injector body 29, thus freeing a portion of the injection port of nozzle 26. The delivery of material B, on the contrary, takes place by lifting a shutter 28 of the corresponding portion of the injection port of nozzle 26 from the injector body 29. It is also possible to carry-out a combination of movements that allow the simultaneous delivery of both materials.

Alternatively, the injection unit of figure 4 can have two separated nozzles (instead of the nozzle 26 alone) placed side by side and each obstructed by related shutters 27 and 28.

The injectors comprise means for the heating and the independent temperature control of each flow of material.

According to a further feature of the present invention, the device also comprises means for a localized heating of a plurality of points of the mold 2, for example in order to improve a homogeneous distribution of materials to particular areas of the mold or to avoid undesirable cooling in correspondence to of conjunction zones between the flows of the materials coming from different injection points.

By performing the coinjection in more points by means of the device of the present invention, the homogeneous distribution of materials in all areas of the mold is therefore ensured, even in the case where the mold is structurally complex or superficially very wide.

The distribution homogeneity of injected materials in correct proportions allows to mass produce articles having excellent aesthetical and functional characteristics in a quick and economic way.

## Claims

1. A device (4,17) to perform the coinjection into a mold (2) of at least two materials at the fluid state coming from one or more equipments (1) for feeding under pressure said materials, comprising canalization means, wherein said materials separately flow, said canalization means being in communication with a plurality of coinjection units (3, 20) arranged in correspondence to different points of a same cavity of said mold, **characterized in that** said canalization means are independently controlled in temperature and said coinjection units (3, 20) are comprising injectors placed side by side, said injectors having means for independent temperature control of each flow of material and being independently regulated as to flow rate.

2. A device (4) according to claim 1, **characterized in that** said canalization means comprise distinct plates (5,6), independently controlled in temperature, arranged between ducts (7,8) feeding said materials to the device (4) and ducts (9,10) for the distribution of said materials to a plurality of coinjection units (3).

3. A device (17) according to claim 1, **characterized in that** said canalization means comprise distinct tubular ducts (21,22), independently controlled in temperature, arranged between ducts (18,19) feeding said materials to the device (17) and ducts (23,24) for the distribution of said materials to a plurality of coinjection units (20).

4. A device (4,17) according to any of the preceding claims, **characterized in that** it comprises means for a localized heating of a plurality of points of said mold (2).

## Patentansprüche

1. Vorrichtung (4, 17) zur Ausführung des Kospritzgießens von wenigstens zwei Werkstoffen in flüssigem Zustand in eine Form (2), die von einer oder mehreren Einrichtungen (1), für die Druckzuführung der Werkstoffe kommen, umfassend Kanalisierungsmittel, in denen die Werkstoffe getrennt voneinander fließen, wobei die Kanalisierungsmittel mit einer Mehrzahl von Kospritzgießeinheiten (3, 20) in Verbindung stehen, die an unterschiedlichen Stellen desselben Hohlraums der Form (2) angeordnet sind, **dadurch gekennzeichnet, dass** die Kanalisierungsmittel unabhängig voneinander in ihrer Temperatur steuerbar sind und die Kospritzgießeinheiten (3, 20) nebeneinander angeordnete Injektoren umfassen, wobei die Injektoren Mittel umfassen zur unabhängigen Temperaturregelung eines jeden Werkstoffflusses und in bezug auf die Fließrate unabhängig geregelt werden.

2. Vorrichtung (4) nach Anspruch 1, **dadurch gekennzeichnet, dass** das Kanalisierungsmittel gesonderte Platten (5, 6) umfasst, die in ihrer Temperatur unabhängig gesteuert werden und zwischen Leitungen (7, 8) angeordnet sind, die die Werkstoffe zur Vorrichtung (4) führen, und Leitungen (9, 10) für die Verteilung der Werkstoffe auf eine Mehrzahl von Kospritzgießeinheiten (3).

3. Vorrichtung (17) nach Anspruch 1, **dadurch gekennzeichnet, dass** das Kanalisierungsmittel gesonderte rohrförmige Leitungen (21, 22) umfasst, die bezüglich der Temperatur unabhängig voneinander gesteuert sind und zwischen den Leitungen (18, 19) angeordnet sind, die die Werkstoffe zur Einrichtung (17) führen, sowie Leitungen (23, 24) für die Verteilung der Werkstoffe auf eine Mehrzahl von Kospritzgießeinheiten (20).

4. Vorrichtung (4, 17) nach jedem der vorangehenden Ansprüche, **dadurch gekennzeichnet, dass** diese Mittel für eine örtliche Erwärmung einer Mehrzahl von Punkten der Form (2) umfasst.

## Revendications

1. Dispositif (4, 17) pour effectuer la coinjection dans un moule (2) d'au moins deux matières à l'état fluide venant d'un ou plusieurs équipements (1) pour la fourniture sous pression desdites matières, comprenant des moyens de canalisation, dans lesquels lesdites matières s'écoulent séparément, lesdits moyens de canalisation étant en communication avec une pluralité d'unités de coinjection (3,20) placées en correspondance à différents points d'une même cavité dudit moule, **caractérisé en ce que** lesdits moyens de canalisation sont réglés indépendamment en température et lesdites unités de coinjection (3, 20) comprennent des injecteurs placés côte à côte, lesdits injecteurs ayant des moyens pour un réglage indépendant de température de chaque débit de matière et étant régulés indépendamment en ce qui concerne le débit.

2. Dispositif (4) selon la revendication 1, **caractérisé en ce que** lesdits moyens de canalisation comprennent des plaques distinctes (5, 6) réglées indépendamment en température, agencées entre des conduits (7, 8) amenant lesdites matières au dispositif (4) et des conduits (9, 10) de distribution desdites matières à une pluralité d'unités de coinjection (3).

3. Dispositif (17) selon la revendication 1, **caractérisé en ce que** lesdits moyens de canalisation comprennent des conduits tubulaires distincts (21, 22) réglés indépendamment en température, prévus entre des conduits (18, 19) d'amenée desdites matières au dispositif (17) et des conduits (23, 24) pour la distribution desdites matières à une pluralité d'unités de coinjection (20).

4. Dispositif (4, 17) selon l'une quelconque des revendications précédentes, **caractérisé en ce qu'**il comprend des moyens pour un chauffage localisé d'une pluralité de points dudit moule (2).
